Europäisches Patentamt

European Patent Office

Office européen des brevets

(19)

(11) EP 0 764 295 B1

(12) FASCICULE DE BREVET EUROPEEN

(45) Date de publication et mention
de la délivrance du brevet:
**09.09.1998 Bulletin 1998/37**

(51) Int Cl.6: **G05B 21/02**, G06F 17/50,
G05D 1/08

(21) Numéro de dépôt: **95922566.5**

(86) Numéro de dépôt international:
**PCT/FR95/00730**

(22) Date de dépôt: **06.06.1995**

(87) Numéro de publication internationale:
**WO 95/34028 (14.12.1995 Gazette 1995/53)**

(54) **PROCEDE ET SYSTEME POUR L'ESTIMATION OPTIMALE NON LINEAIRE DES PROCESSUS DYNAMIQUES EN TEMPS REEL**

VERFAHREN UND SYSTEM ZUR OPTIMALEN NICHTLINEAREN SCHÄTZUNG DYNAMISCHER PROZESSE IN ECHTZEIT

METHOD AND SYSTEM FOR NON-LINEAR OPTIMAL ESTIMATION OF REAL TIME DYNAMIC PROCESSES

(84) Etats contractants désignés:
**AT BE CH DE DK ES GB GR IE IT LI LU MC NL PT SE**

(30) Priorité: **08.06.1994 FR 9407274**

(43) Date de publication de la demande:
**26.03.1997 Bulletin 1997/13**

(73) Titulaire: **Salut, Gérard**
**31000 Toulouse (FR)**

(72) Inventeur: **SALUT, Gérard**
**F-31000 Toulouse (FR)**

(74) Mandataire: **Somnier, Jean-Louis et al**
**c/o Cabinet Beau de Loménie,**
**232, Avenue du Prado**
**13295 Marseille Cédex 08 (FR)**

(56) Documents cités:
**EP-A- 0 516 895**

- **NUCLEAR TECHNOLOGY, vol.104, no.1, Octobre 1993, LA GRANGE PARK, ILLINOIS US pages 128 - 146 A.RACZ KFKI 'DETECTION OF SMALL LEAKAGES BY A COMBINATION OF DEDICATED KALMAN FILTERS AND AN EXTENDED VERSION OF THE BINARY SEQUENTIAL RADIO TEST'**
- **IEEE TRANSACTIONS ON INFORMATION THEORY, vol.24, no.1, Janvier 1978, NEW YORK US pages 32 - 45 M.V.VACA ET AL 'ESTIMATION AND DECISION FOR OBSERVATIONS DERIVED FROM MARTINGALES: PART II'**
- **PROCEEDINGS OF THE 28TH IEEE CONFERENCE ON DECISION AND CONTROL, IEEE PRESS US, vol.1/3, 13 Décembre 1989, TAMPA US pages 594 - 595, XP000091446 C.L.MCCULLOUGH 'PROBABILITY DENSITY UPDATE FOR A DISTRIBUTED SYSTEM BASED ON UNNORMALIZED LOCAL DENSITIES IN THE CONTINUOUS DISCRETE CASE'**
- **PROCEEDINGS OF THE 27TH IEEE CONFERENCE ON DECISION CONTROL, IEEE PRESS US, vol.3/3, 7 Décembre 1988, AUSTIN US pages 2479 - 2483, XP000210310 M.M. AL-IBRAHIM ET AL 'A SIMPLE MULTI SENSOR SEQUENTIAL DETECTION PROCEDURE'**

## Description

La présente invention a pour objet un procédé et système pour l'estimation optimale non linéaire des processus dynamiques en temps réel.

Le procédé suivant l'invention est fondé sur l'utilisation d'une réplication en grand nombre de particules aléatoires simulées et le système de mise en oeuvre de ce procédé est tel qu'il permet de restituer par calcul numérique l'état estimé de ces processus à partir de signaux de mesure échantillonnés et relevés par tout capteur apte à recevoir toute information caractéristique de l'état dudit processus dynamique.

L'estimation est dite non linéaire car elle ne peut se ramener à des opérations linéaires et elle est dite optimale car le processus et les mesures sont sujets à des perturbations ou bruits qui rendent nécessaires l'optimisation probabiliste de cette restitution. Enfin les procédés récurrents du procédé et du système permettent par leur principe même, leur fonctionnement et leur application en temps réel.

Le secteur technique de l'invention est le domaine de la réalisation de systèmes de mesure et de calcul pour l'estimation en temps réel de l'état courant et de la prévision des états futurs d'un processus dynamique, à partir d'observations imparfaites successives de ce processus par un ou plusieurs capteurs.

Parmi les applications de l'invention figurent la restitution, le suivi, la prévision par exemple de la trajectoire d'un aéronef à l'aide d'un radar, mais également de l'état d'une réaction chimique à partir de mesures partielles des concentrations de produits, ou encore le traitement des signaux reçus d'un satellite de positionnement pour en extraire la position du mobile qui le reçoit, etc...

La figure 1 représente schématiquement un procédé et un système connu suivant l'estimation linéaire de Kalman.

La figure 2 représente un exemple d'application électromécanique pour le suivi et la prévision de trajectoire d'aéronef.

La figure 3 représente un autre exemple d'application dans le domaine biochimique pour le suivi et la prévision fermentaire.

La figure 4 est une vue schématique de la constitution générale à la fois de l'organigramme du procédé et du système suivant l'invention.

Rappelons que si l'on connaît en effet l'évolution d'un processus physique au cours du temps, on sait en déduire ce qu'observeront le ou les capteurs associés à ce processus, le tout à chaque instant. L'estimation de l'évolution d'un tel processus dynamique, pour en restituer et en suivre la succession des différents états correspondants, consiste à résoudre le problème inverse du précédent : c'est également celui posé par la présente invention qui en apporte la meilleure solution au sens probabiliste. L'évolution réelle du processus étant alors inconnue, il s'agit d'en faire à chaque instant une estimation qui s'accorde au mieux avec les observations présentes et passées relevées par le ou les capteurs. Cette estimation consiste à calculer la valeur d'un jeu de variables inconnues dites encore composantes ou vecteurs d'état dudit processus, et qui intervient dans le modèle d'évolution de celui-ci. Plus précisément, il s'agit de construire la distribution de probabilité de cet état, conditionnelle à l'ensemble des mesures recueillies au cours du temps. Toute prédiction du comportement ultérieur résulte alors de l'extrapolation de ce vecteur d'état, s'appuyant sur cette distribution, et suivant le modèle d'évolution du processus dynamique.

Lorsqu'on désire réaliser effectivement l'estimation optimale d'un processus dynamique général, le problème qui vient d'être introduit n'a pas de solution constructible par les procédés ou systèmes numériques connus, en raison de l'explosion dimensionnelle et combinatoire qui en découle.

Un seul cas connu de longue date fait exception à cette règle. Il s'agit de l'estimation linéaire de Kalman qui s'appuie sur des modèles linéaires de processus décrits par :

- une matrice de transition d'état $\Phi(t,t-1)$ d'une part,
- une matrice H de prélèvement de mesures, d'autre part.

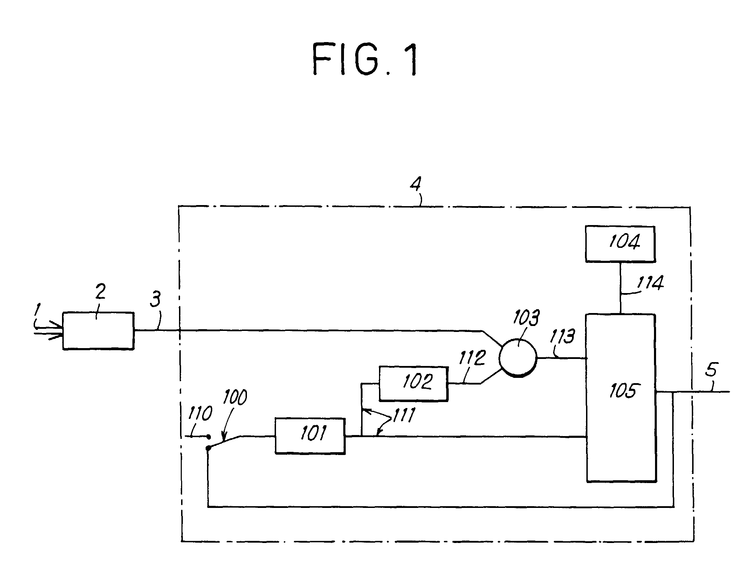

Dans ce cas, la solution algorithmique simple est exécutable par une machine informatique usuelle. Ce procédé est bien connu et peut être résumé comme suit; une représentation du dispositif connu correspondant est donné sur la figure 1 :

- de façon générale, on relève par des capteurs de mesures 2, des données de mesures 3 échantillonnées et liées à l'état du processus 1 à estimer à l'instant considéré t; on déduit alors à partir de ces mesures 3 et suivant un procédé décrit ci-après, utilisé par l'unité de calcul 4, les composantes estimées 5 de l'état du processus 1;
- à l'instant t=1, le commutateur 100 délivre au prédicteur d'état 101 les composantes initiales 110 de l'état du processus, estimées avant toute mesure, stockées dans une mémoire ou en provenance de tout autre moyen et représentées par le vecteur $E[x_1/_1]$; aux instants suivants, t>1, ledit commutateur 100 bascule et délivre au prédicteur d'état 101 les composantes $E[x_{t-1/t-1}]$ de l'état estimé 5 par le correcteur 105 à l'instant précédent. A partir des composantes 5 dudit état estimé, le prédicteur d'état 101 fournit le vecteur d'état prédit 111 à l'instant t, noté

2

$E[x_{t/t-1}]$, en appliquant à l'état estimé 5 la matrice de transition d'état $\Phi(t,t-1)$, hors termes de commande aléatoire, selon la formule :

$$E(x_{t/t-1}) = \Phi(t,t-1) \, E[x_{t-1/t-1}]$$

- à partir de cet état prédit 111, le prédicteur de mesure 102 fournit un vecteur de mesure prédit 112 à l'instant t, désigné par $E[y_{t/t-1}]$, en appliquant audit état prédit 111 la matrice d'observation H, hors terme aléatoire et selon la relation $E[y_{t/t-1}] = H(E[x_{t/t-1}])$. Le soustracteur 103 délivre l'innovation 113 qui est l'écart entre le vecteur de mesure réel 3 à l'instant t de l'état du processus 1 relevé à partir des capteurs 2, noté $y_t$ et le vecteur de mesure prédit 112 pour ce même instant;
- à partir des composantes de l'état prédit 111 et de l'innovation 113, le correcteur 105 calcule le nouvel état 5 estimé $E[x_{t/t}]$ à l'instant t par addition de l'innovation 113 multiplié par un gain matriciel 114, $K_t$, à l'état prédit 111 selon la formule :

$$E[x_{t/t}] = E[x_{t/t-1}] + K_t \, (y_t - E[y_{t/t-1}])$$

- Cedit gain 114 matriciel est calculé par un moyen connu 104 adapté pour cela, indépendamment de toute mesure, de façon récursive à partir de la matrice de transition d'état du processus $\Phi(t,t-1)$, de la matrice d'observation H et des caractéristiques du second ordre des perturbations aléatoires agissant d'une part sur la dynamique du processus 1 et d'autre part sur les capteurs 2 relevant les données de mesure 3;
- l'ensemble des étapes de ce procédé connu suivant Kalman, présenté sur la figure 1, est renouvelé après incrémentation de l'instant t avec un nouveau cycle de prédiction, mesure et correction.

Cependant, cette estimation linéaire de Kalman impose des conditions restrictives souvent absentes en pratique, tel qu'en particulier des phénomènes décrits par des modèles linéaires et des perturbations décrites par des statistiques au second ordre. Malgré tout, une extension de cet estimateur, dit de Kalman étendu est couramment utilisé pour les situations non linéaires, mais cela n'est pertinent que si les écarts entre le modèle du phénomène réel et sa description après linéarisation de ce modèle sont faibles, et en aucune façon pour le cas général de fortes non linéarités.

Par ailleurs, on connaît différents procédés et systèmes de restitution et de prédiction d'état appliqués à des situations spécifiques, dont certains ont fait l'objet de demandes de brevets, telles que la demande FR 2 599 874 publiée le 11 décembre 1987 de la société GEC AVIONICS Limited, concernant un "appareil de mesure de l'état dynamique d'un système notamment pour système de navigation d'aéronefs", comprenant en particulier un circuit d'estimation par récurrence, tel que précisément un filtre de Kalman; ou encore la demande FR 2 692 037 publiée le 10 décembre 1993 de la société THOMSON CSF et intitulée "procédé de diagnostic d'un processus évolutif" grâce à un état de référence et un état courant, à partir de grandeurs physiques mesurées et comparées, en faisant appel à la logique floue pour les classer afin d'établir un diagnostic à l'aide de règle experte.

Pour le premier de ces deux procédés, les limitations liées à l'utilisation d'un filtre de Kalman, viennent d'être soulignées ci-avant et quant au second précité, il concerne un diagnostic qualitatif, dont la nature est étrangère aux impératifs probabilistes qui font l'objet de la présente invention.

Plus proche de celle-ci, on relève la demande FR 2 688 909 publiée le 24 septembre 1993 de la société THOMSON CSF et intitulée "procédé de trajectographie de mobile dans un environnement bruité", consistant à utiliser un maillage de l'espace d'état où peuvent se situer des mobiles et à distribuer sur ce maillage des poids déterminés à partir de mesures relevées par des capteurs, afin de déterminer les chemins les plus probables grâce à une modélisation par chaînes de Markov cachées et par construction de chemins à l'aide de l'algorithme de Viterbi.

Dans ce dernier procédé, l'objection principale qui en limite la portée est le caractère a priori du maillage effectué de l'espace d'état. Celui-ci ne rend compte ni du flot dynamique des lois physiques du phénomène, ni des mesures recueillies qui peuvent influer sur ce maillage. Il en découle une explosion dimensionnelle et combinatoire qui nuit gravement à l'applicabilité et à la précision possibles du procédé.

Le procédé selon la présente invention s'applique, lui, aux situations plus générales où les solutions susdites sont inapplicables. Ce procédé nécessite une architecture ainsi qu'un principe de base radicalement différents et fait appel à la réplication massive de processeurs élémentaires non linéaires, organisés en réseau parallèle, selon un dispositif spécifique qui fait l'objet de la description ci-après : il s'agit d'un procédé que l'on peut qualifier de particulaire et de son système ou dispositif de résolution numérique, qui en permet la réalisation, et qui inclut en particulier un système récursif acceptant pour entrée le modèle probabiliste des transitions d'état du processus à estimer, et délivre en sortie le poids probabiliste des composantes d'état du processus conditionnellement aux mesures recueillies par les capteurs, en temps réel.

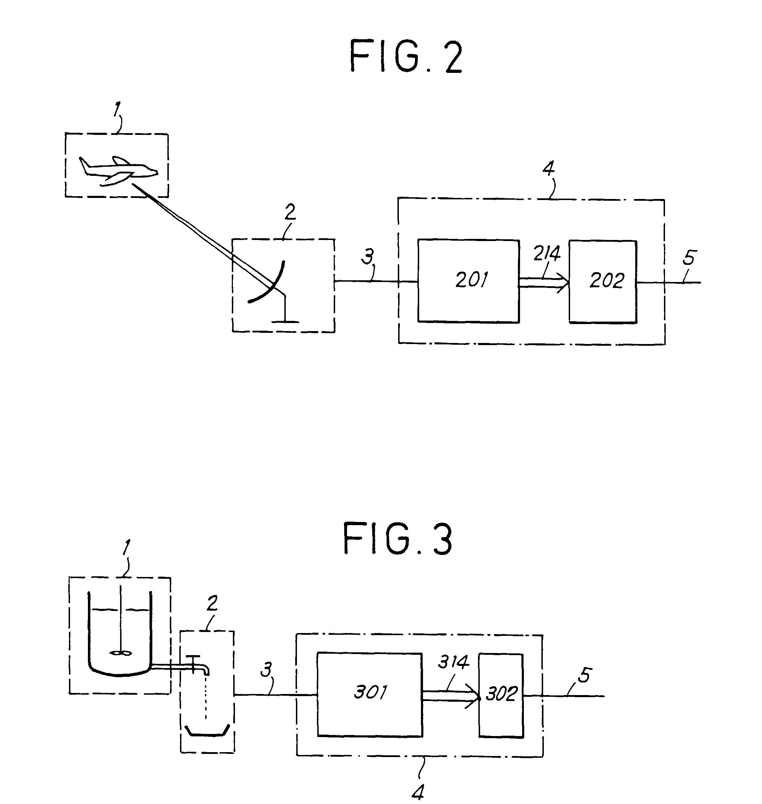

Pour illustrer la présentation du problème posé tel que rappelé en introduction, et en même temps décrire une des applications de la présente invention, la figure 2 représente un exemple dans le domaine électro-mécanique pour le suivi et la prévision de la trajectoire d'un aéronef 1 à partir de données numériques 3 fournies par un capteur tel qu'un radar 2 de poursuite. Le modèle dynamique de l'aéronef 1 peut être constitué à partir des lois fondamentales de l'aérodynamique. Les composantes 5 de l'état que l'on veut estimer sont notamment : la position géographique du centre de gravité, sa vitesse ainsi que les valeurs des commandes liées aux actions de pilotage telles que les angles de braquage des gouvernes, la force de propulsion, etc... Le capteur 2 fournit à chaque instant t des mesures partielles 3 telles que la distance, l'azimut et le site du vecteur d'état x suivant une loi de probabilité connue : il faut pouvoir alors reconstituer la probabilité 214 des composantes de l'état x de l'aéronef 1 conditionnellement à toutes les observations 3 accumulées, grâce à une unité de calcul 4 comprenant des processeurs 201 fonctionnant suivant le procédé décrit dans la présente invention; ladite unité de calcul pouvant comprendre à la suite desdits processeurs 201 un opérateur de calcul 202 qui déduit à partir de la répartition probabiliste 214 de l'état de l'aéronef 1, une ou plusieurs informations spécifiques de cet état, telles que les composantes 5 citées précédemment.

Ceci est d'autant plus difficile à réaliser que les mesures et l'évolution du processus 1, tel que l'aéronef, sont généralement sujets à des perturbations aléatoires agissant entre autres sur le processus lui-même, et que l'on ne peut pas déceler du sol, même par le radar 2 : c'est par exemple le cas quand le pilote agit sur ses gouvernes brutalement, ou qu'une perturbation atmosphérique influence la trajectoire de l'aéronef; par ailleurs, des bruits peuvent perturber la mesure du radar lui-même comme de tout capteur de mesures partielles.

La figure 3 est un autre exemple dans le domaine biochimique pour le suivi et la prévision de l'état d'un procédé de fermentation en bioréacteur 1 à partir de données numériques échantillonnées 3 fournies par un capteur 2, tel qu'un analyseur de concentration 2. Le modèle dynamique du procédé de fermentation décrit de façon non linéaire les phénomènes de transfert de masse entre les différentes composantes de l'état du processus de fermentation que l'on veut estimer 5, telles que la concentration des micro-organismes caractérisant la biomasse, la concentration du nutrient alimentant cette biomasse ainsi que celle du produit de synthèse formé. Le capteur 2 fournit à chaque instant t une mesure partielle 3 telle que la concentration du nutrient après analyse d'un prélèvement effectué automatiquement. La probabilité 314 des composantes de l'état de la fermentation, conditionnelle à toutes les mesures 3 accumulées au cours du temps est calculée grâce à une unité de calcul 4 comprenant des processeurs 301 fonctionnant suivant le procédé décrit ci-après de la présente invention; ladite unité de calcul 4 pouvant comprendre également à la suite desdits processeurs 301 un opérateur de calcul 302 qui déduit à partir de la répartition probabiliste 314 de l'état du bioréacteur 1, une ou plusieurs informations spécifiques de cet état, tel que les composantes citées précédemment.

Selon la présente invention, le processus dynamique à estimer s'appuie sur un modèle probabiliste du type $x_{t+1} = f(x_t, w_t)$, représenté encore par sa probabilité dynamique de transition d'état, notée $p(x_{t+1}/x_t)$ ; l'instant d'échantillonnage de base du processus est noté t; les vecteurs x et w représentent respectivement les composantes de l'état du processus dynamique et de la perturbation associée; enfin, on désigne par f la fonction de transition de l'état du processus 1.

Les mesures effectuées s'appuient sur le modèle probabiliste $y_t = h(x_t, v_t)$ représenté encore par la probabilité des mesures à partir de l'état notée $p(y_t/x_t)$; le vecteur y contient les mesures 3 relevées par les capteurs 2, le vecteur v les perturbations le plus souvent additives, altérant la qualité des mesures 3; enfin, on désigne par h la fonction de mesure partielle sur l'état du processus 1.

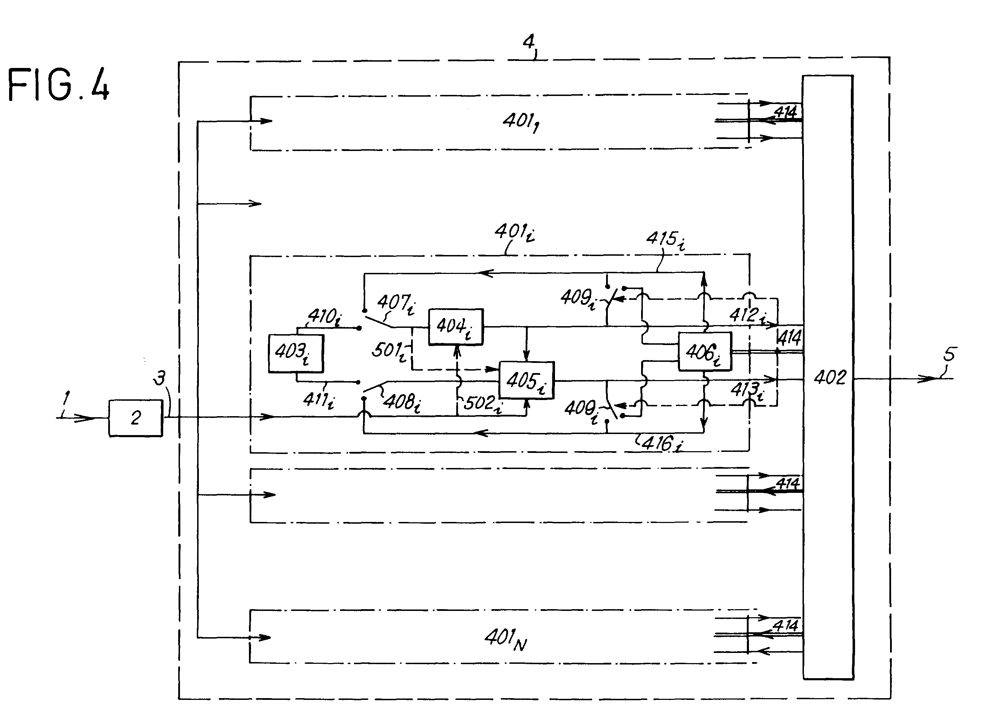

Le procédé selon l'invention, pour l'estimation optimale non linéaire des processus dynamiques en temps réel, et le système qui en permet sa réalisation par des moyens de calcul numérique, tel qu'illustré sur la figure 4, procèdent alors de la manière suivante, dans un cadre général connu tel que :

- on relève par des capteurs de mesure 2, tel qu'un radar représenté sur la figure 2, des données de mesure échantillonnées 3 et liées à l'état du processus 1 à l'instant considéré t;
- on déduit alors à partir de ces données mesurées 3 par les capteurs 2 et suivant un programme de calcul mémorisé dans l'unité de calcul 4, les composantes estimées 5 caractérisant l'état du processus à cet instant t;
- et on recommence l'opération de façon récurrente à l'état suivant t+1 lorsqu'arrivent de nouvelles mesures 3.

De plus, suivant l'invention :

- on dispose de N processeurs particuliers identiques $401_i$ disposés en parallèle dans ladite unité de calcul 4 composés chacun d'au moins deux opérateurs élémentaires associés, dont l'un est un générateur aléatoire d'évolution $404_i$ à partir duquel on délivre les composantes d'un état possible $412_i$ du processus dynamique à l'instant courant t, et l'autre est un pondérateur $405_i$ à partir duquel on affecte lesdites composantes $412_i$ délivrées par le générateur aléatoire $404_i$, d'une grandeur scalaire $413_i$ appelée poids, représentant la probabilité que cesdites composantes $412_i$ soient celles de l'état courant du processus dynamique 1 à estimer;
- on produit par ledit générateur aléatoire d'évolution $404_i$ un état possible $412_i$ du processus à estimer parmi l'ensemble constituant l'espace d'état, tenant compte des composantes de cet état possible calculées à l'instant t-1 et de la probabilité de transition d'état du processus dynamique entre les instants t-1 et t;

- on calcule par ledit pondérateur $405_i$ le poids $413_i$ de l'état possible $412_i$ à partir de la valeur dudit poids à l'instant précédent t-1, des valeurs des composantes de cet état possible $412_i$ et des données de mesure 3 relevées par les capteurs 2 à l'instant t courant, le tout au moyen de la probabilité du bruit perturbant ces mesures;
- on initialise chaque processeur $401_i$ en tirant aléatoirement les composantes initiales $410_i$ dudit état possible et le poids initial $411_i$ associé par un générateur d'état initial $403_i$ selon une loi propre de probabilité à priori, représentative de la connaissance de l'état initial du processus dynamique 1;
- on délivre à chaque instant t, à partir des sorties de chacun des N processeurs particulaires $401_i$, la répartition probabiliste de l'état du processus dynamique conditionnelle aux données mesurées 3 par les capteurs 2 jusqu'à cet instant t, ladite répartition ayant pour support l'ensemble des états possibles $412_i$ et pour distribution ponctuelle de masse les poids $413_i$ associés à chacun desdits états possibles.

Pour réaliser le procédé ci-dessus, le système suivant l'invention, pour l'estimation optimale non linéaire de l'état d'un processus dynamique 1 en temps réel, comporte des capteurs de mesure 2 délivrant des données échantillonnées 3 liées à l'état du processus 1 à l'instant considéré t et une unité de calcul 4 comportant N processeurs particulaires $401_i$ disposés en parallèle et recevant chacun lesdites données de mesure 3; chacun desdits N processeurs $401_i$ comporte au moins un générateur aléatoire $404_i$ d'évolution qui, tenant compte de perturbations aléatoires dans cette dite évolution, délivre des valeurs possibles $412_i$ de l'état du processus dynamique 1 à l'instant t, et un opérateur spécialisé $405_i$ calculant, à partir de ces dites valeurs possibles $412_i$ de l'état du processus et des dites données de mesure 3 une grandeur scalaire $413_i$ représentant la probabilité que cet état $412_i$ soit réel à l'instant t du processus.

Ladite unité de calcul 4 est chargée par des programmes aptes à permettre le fonctionnement dudit système suivant le procédé tel que décrit précédemment et ci-après, aussi bien dans son mode minimum principal que dans ses modes préférentiels.

Chaque processeur élémentaire ou dit encore particulaire, tel que $401_i$, reçoit donc le vecteur de mesures 3 relevé à l'instant t par les capteurs 2 et simule une trajectoire particulière possible, c'est-à-dire l'évolution d'une particule aléatoire dont l'état respecte le même modèle probabiliste que le processus 1 à estimer.

Chacun desdits processeurs particulaires $401_i$ fournit alors selon un programme de calcul qui lui est appliqué, stockées préalablement dans une mémoire associée par exemple, deux informations en sortie : une grandeur vectorielle $412_i$ notée $x^i_t$ représentant les composantes d'un état possible du vecteur d'état x du processus 1 à estimer à l'instant courant t; une grandeur scalaire $413_i$ appelée poids notée $p^i_t$, représentant la probabilité que le vecteur $x^i_t$ soit celui du processus à estimer compte tenu des mesures 3 disponibles jusqu'à l'instant t.

On construit, à partir de ces deux degrés de liberté que sont d'une part la grandeur vectorielle $412_i$ et la grandeur scalaire $413_i$ calculés pour chacun des N processeurs, la probabilité de l'état conditionnelle aux observations, notée $p(x_t/y_\tau$ pour $\tau$, $0 \leq \tau \leq t)$, au sens mathématique dit faible. Ladite loi ou répartition probabiliste a pour support l'ensemble des états possibles $412_i$ et pour distribution ponctuelle de masse les poids $413_i$, $p^i_t$, associés à ces états.

Une description détaillée d'un processeur particulaire $401_i$ est donnée ci-après :

- à l'instant initial noté t=1, le commutateur $407_i$ délivre au générateur d'évolution $404_i$ les composantes $410_i$ de l'état initial possible, tiré aléatoirement par le générateur d'état initial $403_i$ selon une loi propre de probabilité a priori, ladite loi étant représentative de la connaissance sur l'état initial du processus à estimer. Le commutateur $408_i$ délivre au pondérateur $405_i$ la probabilité non normalisée ou poids $411_i$, associé à la réalisation du tirage des composantes de l'état possible initial $410_i$;
- aux instants t suivants, le commutateur $407_i$ délivre au générateur d'évolution $404_i$ les composantes $x^i_{t-1}$ de l'état possible $412_i$ calculé par ce même générateur à l'instant t-1; le commutateur $408_i$ délivre à l'entrée du pondérateur $405_i$ le poids $413_i$ ou $p^i_{t-1}$ calculé à l'instant t-1 par le pondérateur. Le générateur d'évolution $404_i$ calcule alors les nouvelles composantes $x^i_t$ d'un état possible $412_i$ à l'instant t, conformément aux transitions d'état entre les instants t-1 et t, avec tirage des termes aléatoires notés $w^i_t$, selon leur probabilité à priori, soit :

$$x^i_t = f(x^i_{t-1}, w^i_t).$$

Il faut souligner que les transitions d'état entre t-1 et t, instant d'échantillonnage des mesures 3, peuvent être construites de la même manière que ci-dessus, au moyen de transitions plus fines entre des instants de sous-échantillonnage $t_k$, si la nature du processus l'impose, notamment pour les processus continus.

A partir des composantes de l'état possible $412_i$ et du vecteur de mesure réel 3 à l'instant t, le pondérateur $405_i$ fournit le poids $p^i_t$ de l'état $412_i$, $x^i_t$, égal d'après la règle de Bayes, au produit de la probabilité des bruits de mesure expliquant $y_t$ à partir de $x^i_t$ et du poids associé aux composantes de l'état possible $x^i$ à l'instant t-1, soit :

$$p^i_t = p(y_t/x^i_t)\, p^i_{t-1.}$$

On peut garantir pour un nombre N de processeurs particulaires $401_i$ suffisamment élevé, que l'ensemble 414 des N vecteurs d'état possibles tels que $412_i$, pondérés par leur poids respectif $413_i$, est représentatif de la loi de probabilité conditionnelle du vecteur d'état du processus, la loi des grands nombres assurant la convergence de la représentation.

Si on ne s'intéresse pas à la forme de cette loi, mais plutôt à une meilleure estimation du vecteur d'état selon un critère donné, on fait suivre le réseau de N processeurs $401_i$ dont la structure minimale a été ci-avant décrite, d'un opérateur de calcul 402 spécifique à l'estimateur correspondant, tel que le vecteur moyen pour l'estimation avec un minimum de variance de l'erreur d'estimation, ou vecteur à vraisemblance maximale. On détermine l'état estimé optimal 5 du processus dynamique 1 à partir de ladite répartition probabiliste conditionnelle par le choix d'un indicateur particulier permettant l'estimation ci-dessus par l'opérateur de calcul 402.

A titre d'exemple, le calcul du vecteur d'état moyen 5 estimé $x_t$ se réduit à :

$$E[x_t] = \sum_{i=1}^{N} x^i{}_t \left(p^i t / \sum_{j=1}^{N} p^j{}_t\right)$$

Dans un mode préférentiel de fonctionnement, où le système doit fonctionner en régime permanent, des aménagements à celui-ci et à son procédé sont nécessaires car les poids 413 issus de l'application directe du pondérateur 405 peuvent dégénérer avec le temps, sous l'effet de l'accumulation indéfinie des mesures 3. Afin de garantir une performance uniforme dans le temps pour un nombre N de processeurs $401_i$ donné, il est alors nécessaire de régulariser le poids de probabilité $413_i$ en limitant leur portée temporelle. Pour cela, deux variantes peuvent s'appliquer :

- par oubli asymptotique des informations passées, tel qu'un oubli exponentiel glissant,
- ou par la prise en compte d'une partie finie des observations, telle qu'une fenêtre temporelle glissante.

On limite ainsi strictement dans le temps ou on atténue asymptotiquement l'influence des données passées, mesurées par les capteurs 2 sur le poids $413_i$ associé aux composantes $412_i$ d'un état possible.

Dans un mode préférentiel de fonctionnement où le processus dynamique à estimer est instable, les tirages des perturbations aléatoires selon une loi d'évolution a priori, conduisent à une évolution naturellement divergente des états possibles $412_i$ et donc à une dégénérescence progressive des poids $413_i$. Dans ce cas, on conditionne le générateur aléatoire d'évolution $404_i$, afin de restaurer la convergence, en effectuant les tirages conditionnellement au "n" dernières mesures relevées par les capteurs, "n" étant le nombre de modes "instables" du modèle du processus 1. Le fonctionnement du procédé est alors modifié aux instants t> 1, par les connexions qui sont donc optionnelles $501_i$ et $502_i$, et tel que décrit ci-après :

- le pondérateur $405_i$ délivre le poids $413_i$ de l'état possible $x^i$ à l'instant t, à partir de la probabilité des bruits de mesure expliquant les mesures $y_t$ à partir de l'état possible à l'instant t-1, soit :

$$p^i_t = p(y_t/x^i_{t-1})\, p^i_{t-1}$$

- le générateur d'évolution $404_i$ délivre ensuite un nouvel état possible $412_i$ à l'instant t en appliquant l'équation d'évolution, avec tirages des termes aléatoires $w^i_t$ conditionnés par les mesures 3 et la valeur des composantes de l'état possible à l'instant t-1, soit :

$$x^i_t = f(x^i_{t-1}, w^i_t),$$

$w^i_t$ étant tiré selon la loi $p(w_t/x^i_{t-1}, y_t)$.

Dans un mode préférentiel de réalisation, permettant d'améliorer la vitesse de convergence de l'estimation sans augmenter le nombre N de processeurs particuliers du réseau, on utilise une procédure de redistribution des composantes des états possibles $412_i$, conforme à leur probabilité ou vraisemblance : un tel procédé comme défini ci-dessous, concentre la capacité exploratoire de ce réseau dans les zones de l'espace d'état où la probabilité de présence est maximale, augmentant ainsi la précision de l'estimation. Cette variante introduit un couplage momentané 414 entre les N processeurs $401_i$ de l'unité de calcul 4 du dispositif suivant la figure 4. Grâce à des commutateurs $409_i$ et un

organe de redistribution $406_i$ alors activés, on redistribue aléatoirement dans au moins certains processeurs particulaires $401_i$, les composantes des N états $412_i$, délivrées par l'ensemble des processeurs $401_i$ particulaires, suivant la répartition probabiliste conditionnelle 414 reconstruite par le procédé de la présente invention, et suivant une procédure propre d'activation des commutateurs $409_i$. La procédure de redistribution est décrite ci-dessous :

- les poids $416_i$ des composantes desdits états redistribués $415_i$ sont équirépartis sur l'ensemble de leurs supports $415_i$;
- le commutateur $409_i$ peut activer l'organe de redistribution $406_i$ soit périodiquement selon une occurrence fixée a priori, soit par un programme de calcul fonction de la dispersion relevée entre les valeurs $413_i$ des poids délivrés à l'instant courant par les N processeurs;
- ladite redistribution peut être totale sur l'ensemble des N processeurs particulaires $401_i$ ou simplement partielle sur une fraction de ceux-ci; des états possibles nouvellement crées autour des mesures 3, délivrées par les capteurs, peuvent être aussi utilisés comme supports dans l'organe de redistribution $406_i$;
- les composantes des états $415_i$ ainsi redistribués et leur poids de probabilité associé $416_i$ sont normalement réutilisés par lesdits générateurs d'évolution $404_i$ et pondérateurs $405_i$ à l'instant suivant.

Ladite unité de calcul 4 peut comporter un indicateur particulier 402 qui reçoit l'ensemble 414 desdits états possibles $412_i$ pondérés par leur poids $413_i$ et délivrant l'estimation 5 de l'état réel du processus 1 suivant son évolution probable.

Le résultat est un nouveau procédé et système numérique pour l'estimation optimale en temps réel de l'état d'un processus dynamique, et qui répond aux objectifs cités précédemment, pour tout processus dynamique stochastique, à évolution non-linéaire, et suivi par des capteurs délivrent des signaux bruités sur une partie seulement de l'état du processus.

Les explications et les figures 2 et 3 ci-jointes, relatives aux exemples de réalisation de l'invention, en particulier dans l'application à la trajectographie d'un aéronef, n'ont aucun caractère limitatif : d'autres exemples d'application sont possibles, en particulier pour tout processus dynamique tel que défini en introduction.

D'une manière générale, le procédé et le système selon l'invention, que l'on peut donc qualifier de numérique et particulaire pour l'estimation non linéaire optimale et en temps réel de l'état d'un processus dynamique, repose sur une utilisation dynamique de tirages aléatoires massifs convenablement pondérés, qui reconstituent la probabilité de l'état du processus à estimer conditionnellement aux observations délivrées par le ou les capteurs de mesure de certaines composantes de l'état de ce processus. Ne nécessitant pas de résolution explicite des équations du problème, le procédé et les systèmes permettant sa réalisation pratique, sont applicables quelle soit la complexité des modèles, notamment en matière de non linéarité et de non gaussieneté. Aucun modèle physique, aussi réaliste soit-il, ne lui est donc inaccessible. Le procédé utilise en particulier la loi des grands nombres pour une exploration conforme aux probabilités à priori et la loi des probabilités conditionnelles pour la correction à posteriori au moyen des observations.

**Revendications**

1. Procédé pour l'estimation optimale non linéaire des processus dynamiques (1) en temps réel suivant lequel - on relève par des capteurs de mesure (2) des données échantillonnées (3) et liées à l'état du processus (1) à l'instant considéré t; on déduit alors desdites données mesurées (3) par les capteurs et suivant un programme de calcul mémorisé dans l'unité de calcul (4), les composantes estimées (5) de l'état du processus à cet instant t, on recommence l'opération de façon récurrente pour estimer l'état suivant à l'instant t+1 lorsqu'arrivent de nouvelles mesures (3), caractérisé en ce que :

   - on dispose de N processeurs particulaires identiques ($401_i$) disposés en parallèle dans ladite unité de calcul (4) composés chacun d'au moins deux opérateurs élémentaires associés, dont l'un est un générateur aléatoire d'évolution ($404_i$) à partir duquel on délivre les composantes d'un état possible ($412_i$) du processus dynamique à l'instant courant t, et l'autre est un pondérateur ($405_i$) à partir duquel on affecte lesdites composantes ($412_i$) délivrées par le générateur aléatoire ($404_i$), d'une grandeur scalaire ($413_i$) appelée poids, représentant la probabilité que cesdites composantes ($412_i$) soient celles de l'état courant du processus dynamique (1) à estimer;
   - on produit par ledit générateur aléatoire d'évolution ($404_i$) un état possible ($412_i$) du processus à estimer parmi l'ensemble constituant l'espace d'état, tenant compte des composantes de cet état possible calculées à l'instant t-1 et de la probabilité de transition d'état du processus dynamique entre les instants t-1 et t;
   - on calcule par ledit pondérateur ($405_i$) le poids ($413_i$) de l'état possible ($412_i$) à partir de la valeur dudit poids à l'instant précédent t-1, des valeurs des composantes de cet état possible ($412_i$) et des données de mesure

(3) relevées par les capteurs (2) à l'instant t courant, le tout au moyen de la probabilité du bruit perturbant ces mesures;

- on initialise chaque processeur ($401_i$) en tirant aléatoirement les composantes initiales ($410_i$) dudit état possible et le poids initial ($411_i$) associé par un générateur d'état initial ($403_i$) selon une loi propre de probabilité a priori, représentative de la connaissance de l'état initial du processus dynamique (1);
- on délivre à chaque instant t, à partir des sorties de chacun des N processeurs particuliers ($401_i$), la répartition probabiliste de l'état du processus dynamique conditionnelle aux données mesurées (3) par les capteurs (2) jusqu'à cet instant t, ladite répartition ayant pour support l'ensemble des états possibles ($412_i$) et pour distribution ponctuelle de masse les poids ($413_i$) associés à chacun desdits états possibles.

2. Procédé selon la revendication 1, caractérisé en ce qu'on détermine l'état estimé optimal (5) du processus dynamique (1) à partir de ladite répartition probabiliste conditionnelle par le choix d'un indicateur particulier (402).

3. Procédé selon l'une quelconque des revendications 1 et 2, caractérisé en ce qu'on limite strictement dans le temps ou on atténue asymptotiquement l'influence des données passées, mesurées par les capteurs (2) sur le poids ($413_i$) associé aux composantes ($412_i$) d'un état possible.

4. Procédé selon l'une quelconque des revendications 1 à 3, caractérisé en ce qu'on conditionne ledit générateur aléatoire d'évolution ($404_i$) par les n dernières mesures relevées par les capteurs (2).

5. Procédé selon l'une quelconque des revendications 1 à 4, caractérisé en ce qu'on redistribue par des organes de distribution ($406_i$, $409_i$) aléatoirement de façon équipondérée, au moins une partie des N états possibles ($412_i$) suivant ladite répartition probabiliste conditionnelle des supports desdits états possibles délivrés par les N processeurs ($401_i$) particuliers.

6. Système pour l'estimation optimale non linéaire de l'état d'un processus dynamique (1) en temps réel, comportant des capteurs de mesure (2) délivrant des données échantillonnées (3) liées à l'état du processus (1) à l'instant considéré t, une unité de calcul (4), associée à des mémoires et chargée par des programmes de calcul, aptes à délivrer de façon récurrente les composantes estimées (5) de l'état du processus à l'instant considéré t, caractérisé en ce que ladite unité de calcul (4) comporte N processeurs particuliers ($401_i$) disposés en parallèle et recevant chacun lesdites données de mesure (3), chacun desdits N processeurs ($401_i$) comportant au moins un générateur aléatoire ($404_i$) d'évolution qui, tenant compte de perturbations aléatoires dans cette dite évolution, délivre des valeurs possibles ($412_i$) de l'état du processus dynamique (1) à l'instant t et un opérateur spécialisé ($405_i$) calculant, à partir de ces dites valeurs possibles ($412_i$) de l'état du processus et des dites données de mesure (3) une grandeur scalaire ($413_i$) représentant la probabilité que cet état ($412_i$) soit réel à l'instant t du processus.

7. Système selon la revendication 6, caractérisé en ce que ladite unité de calcul (4) comporte un indicateur particulier (402) qui reçoit l'ensemble (414) desdits états possibles ($412_i$) pondérés par leur poids ($413_i$) et délivrant l'estimation (5) de l'état réel du processus (1) suivant son évolution probable.

8. Système selon l'une quelconque des revendications 6 ou 7, caractérisé en ce que ladite unité de calcul (4) est chargée par des programmes aptes à permettre le fonctionnement dudit système suivant le procédé de l'une quelconque des revendications 1 à 5.

**Patentansprüche**

1. Verfahren zur optimalen nichtlinearen Schätzung dynamischer Prozesse in Echtzeit, wobei zum betrachteten Zeitpunkt t durch Meßfühler (2) Momentwerte (3) aufgenommen werden die mit dem Prozeßzustand (1) verbunden sind; die Schätzkomponenten (5) des Prozeßzustandes zum Zeitpunkt t werden von den Meßwerten (3) durch die Meßfühler und von einem in der Recheneinheit (4) gespeicherten Rechenprogramm abgeleitet und der Vorgang wird rücklaufend wieder begonnen, um den folgenden Zustand zum Zeitpunkt t+1 zu schätzen, während neue Meßwerte (3) eintreffen, dadurch gekennzeichnet, daß

- jeweils N gleiche Prozessoren ($401_i$) vorliegen, die parallel in der Recheneinheit (4) angeordnet sind und jeder aus mindestens zwei angeschlossenen elementaren Operatoren besteht, wobei einer ein Entwicklungszufallsgenerator ($404_i$) ist, der die Komponenten eines möglichen Zustandes ($412_i$) des dynamischen Prozesses

zum laufenden Zeitpunkt t liefert und der andere eine Gewichtungsvorrichtung ($405_i$) ist, mit der auf die durch den Zufallsgenerator ($404_i$) erzeugten Komponenten ($412_i$) mit einer Wichtung genannten skalaren Größe ($413_i$) eingewirkt wird, die die Wahrscheinlichkeit der Komponenten ($412_i$) darstellt, die die des Ist-Zustandes des zu schätzenden dynamischen Prozesses (1) sind; durch den Entwicklungszufallsgenerator ($404_i$) wird unter Berücksichtigung der zum Zeitpunkt t-1 berechneten Komponenten dieses möglichen Zustandes und unter der Berücksichtigung der Zustandsübergangswahrscheinlichkeit des dynamischen Prozesses zwischen den Zeitpunkten t-1 und t ein möglicher Zustand ($412_i$) des zu schätzenden Prozesses, unter allen Zuständen erzeugt, die den Zustandsraum darstellen;

- durch die Gewichtungsvorrichtung ($405_i$) wird die Wichtung ($413_i$) des möglichen Zustandes ($412_i$) aufgrund des Wertes der Wichtung zum vorherigen Zeitpunkt t-1 berechnet und aufgrund der Werte der Komponenten des möglichen Zustandes ($412_i$) und der durch die Meßfühler (2) zum laufenden Zeitpunkt t erhobenen Meßwerte, wobei die Berechnung unter Berücksichtigung der Rauschwahrscheinlichkeit erfolgt, die die Messungen stören;

- jeder Prozessor ($401_i$) wird initialisiert, indem zufällig die Anfangskomponenten ($410_i$) des möglichen Zustandes und die damit verbundene Anfangswichtung durch einen Anfangszustandsgenerator ($403_i$) nach einem Anfangswahrscheinlichkeitsgesetz gezogen werden, das die Kenntnis des Anfangszustands des dynamischen Prozesses (1) darstellt;

- zu jedem Zeitpunkt t wird von jedem der Ausgänge der jeweils N Prozessoren ($401_i$) die Wahrscheinlichkeitsverteilung des dynamischen Prozesses geliefert, die durch die durch die Meßfühler bis zum Zeitpunkt t gemessenen Daten (3) bedingt sind, wobei die Verteilung auf alle möglichen Zustände ($412_i$) gestützt ist und für die pünktliche Massenverteilung die mit jedem der möglichen Zustände verbundenen Wichtungen ($413_i$).

2. Verfahren nach Anspruch 1, dadurch gekennzeichnet, daß der optimal geschätzte Zustand (5) des dynamischen Prozesses (1) aufgrund der gültigen Wahrscheinlichkeitsverteilung bedingt durch die Wahl eines eigenen Indikators (402) bestimmt wird.

3. Verfahren nach einem der Ansprüche 1 und 2, dadurch gekennzeichnet, daß der Einfluß der vergangenen durch die Meßfühler (2) gemessenen Werte strikt zeitlich limitiert wird oder den Einfluß der früheren Komponenten asymptotisch verringert die durch die Meßfühler mit der Gewichtung ($413_i$), die mit den Komponenten eines möglichen Zustandes verbunden ist, gemessen wurden.

4. Verfahren nach einem der Ansprüche 1 bis 3, dadurch gekennzeichnet, daß der Entwicklungszufallsgenerator ($404_i$) durch die n letzten, von den Meßfühlern (2) aufgenommenen Messungen bedingt wird.

5. Verfahren nach einem der Ansprüche 1 bis 4, dadurch gekennzeichnet, daß wenigstens ein Teil der N möglichen Zustände ($412_i$) durch Verteilungsorgane ($406_i$; $409_i$) zufällig mit gleicher Wichtung nach der gültigen Wahrscheinlichkeitsverteilung, die durch die Unterstützung der durch die jeweils N Prozessoren gelieferten möglichen Zustände bedingt ist, wieder verteilt wird.

6. System zur optimalen, nichtlinearen Schätzung des Zustandes eines dynamischen Prozesses (1) in Echtzeit, das Meßfühler aufweist, die Momentanwerte (3) liefern, die mit dem Zustand des Prozesses zum betrachteten Zeitpunkt t verbunden sind, eine Recheneinheit (4), die mit Speichern verbunden ist und durch Rechenprogramme geladen wird, die geeignet sind, rücklaufend die geschätzten Komponenten (5) des Zustandes des Prozesses zum betrachteten Zeitpunkt t zu liefern, dadurch gekennzeichnet, daß die Recheneinheit (4) jeweils N Prozessoren ($401_i$) aufweist, die parallel angeordnet sind und jeder die Meßwerte (3) empfängt, wobei jeder der N Prozessoren ($401_i$) einen Entwicklungszufallsgenerator ($404_i$) aufweist, der unter der Berücksichtigung von Zufallsstörungen in dieser Entwicklung mögliche Werte ($412_i$) des Zustandes des dynamischen Prozesses zum Zeitpunkt t liefert und einen speziellen Operator ($405_i$), der mit den möglichen Werten (412) des Zustandes des Prozesses und den Meßwerten (3) eine skalare Größe ($413_i$) berechnetet, die die Wahrscheinlichkeit des nun reellen Zustandes zum Zeitpunkt t des Prozesses darstellt.

7. System nach Anspruch 6, dadurch gekennzeichnet, daß die Recheneinheit (4) einen eigenen Indikator (402) aufweist, der die Gesamtheit (414) der mit ihrer Wichtung ($413_i$) gewichteten möglichen Zustände ($412_i$) empfängt und die Schätzung des realen Zustandes des Prozesses gemäß seiner wahrscheinlichen Entwicklung abgibt.

8. System nach einem der Ansprüche 6 oder 7, dadurch gekennzeichnet, daß die Recheneinheit (4) mit Programmen geladen wird, die den Ablauf des Systems nach dem Verfahren nach einem der Ansprüche 1 bis 5 ermöglichen.

**Claims**

1. A method for non-linear optimal estimation of dynamic processes (1) in real time in which - measurement sensors (2) measure sampled data (3) associated with the state of the process (1) at the instant under consideration $\underline{t}$; said data (3) measured by the sensors is then used in application of a computation program stored in the computation unit (4) to deduce the estimated components (5) of the state of the process at said instant $\underline{t}$, and the operation is repeated recurrently to estimate the state at the instant following t+1 on arrival of new measurements (3), the method being characterized in that:

   - use is made of N identical particular processors $(401_i)$ disposed in parallel in said computation unit (4) and each comprising at least two associated elementary operators, one of which is a behavior random generator $(404_i)$ which delivers components of a possible state $(412_i)$ of the dynamic process at the current instant $\underline{t}$, and the other of which is a weighting unit $(405_i)$ from which said components $(412_i)$ delivered by the random generator $(404_i)$ are associated with a scalar magnitude $(413_i)$ referred to as a weight, representing the probability that said components $(412_i)$ are those of the current state of the dynamic process (1) to be estimated;
   - said behavior random generator $(404_i)$ produces a possible state $(412_i)$ for the process to be estimated selected from the set constituting state space, and taking into account the components of said possible state computed at instant t-1 and the probability of transition in the state of the dynamic process between instants t-1 and $\underline{t}$;
   - said weighting unit $(405_i)$ computes the weight $(413_i)$ of possible state $(412_i)$ on the basis of the value of said weight at the preceding instant t-1, on the basis of the values of the components of said possible state $(412_i)$, and on the basis of measurement data (3) picked up by the sensors (2) at the current instant $\underline{t}$, with all the above taking into account the probability of noise disturbing said measurements;
   - each processor $(401_i)$ is initialized by randomly drawing the initial components $(410_i)$ of said possible state and the associated initial weight $(411_i)$ by means of an initial state generator $(403_i)$ which applies its own specific <u>a priori</u> probability relationship representative of knowledge about the initial state of the dynamic process (1); and
   - at each instant $\underline{t}$, the probabilistic distribution of the state of the dynamic process conditional on the data (3) measured by the sensors (2) up to the instant $\underline{t}$ is delivered at each said instant $\underline{t}$, said distribution having as its support the set of possible states $(412_i)$ and as its mass point distribution the weights $(413_i)$ associated with each of said possible states.

2. A method according to claim 1, characterized in that the optimal estimated state (5) of the dynamic process (1) is determined on the basis of said conditional probabilistic distribution by selecting a particular indicator (402).

3. A method according to any one of claims 1 and 2, characterized in that the influence of past data measured by the sensors (2) on the weights $(413_i)$ associated with the components $(412_i)$ of a possible state is strictly attenuated in time or is attenuated asymptotically.

4. A method according to any one of claims 1 to 3, characterized in that said behavior random generator $(404_i)$ is conditioned by the <u>n</u> most recent measurements taken by the sensors (2).

5. A method according to any one of claims 1 to 4, characterized in that at least a portion of the N possible states $(412_i)$ depending on said conditional probabilistic distribution of the supports of said possible states delivered by the N particular processors $(401_i)$ are randomly redistributed by distribution members $(406_i, 409_i)$ in uniformly weighted manner.

6. A system for non-linear optimal estimation of the state of a dynamic process (1) in real time, the system comprising measurement sensors (2) delivering sampled data (3) associated with the state of the process (1) at the instant under consideration $\underline{t}$, a computation unit (4) associated with memories and loaded with computation programs suitable for delivering in recurrent manner the estimated components (5) of the state of the process at the instant under consideration $\underline{t}$, the system being characterized in that said computation unit (4) comprises N particular processors $(401_i)$ disposed in parallel and each receiving said measurement data (3), each of said N processors $(401_i)$ including at least one behavior random generator $(404_i)$ which, taking account of random disturbances in said behavior, delivers possible values $(412_i)$ of the state of the dynamic process (1) at the instant $\underline{t}$, together with a specialized operator $(405_i)$ which uses said possible values $(412_i)$ for the state of the process and said measurement data (3) to compute a scalar magnitude $(413_i)$ representing the probability that said state $(412_i)$ is real at instant $\underline{t}$ of the process.

**7.** A system according to claim 6, characterized in that said computation unit (4) includes a particular indicator (402) which receives the set of said possible states ($412_i$) weighted by their weights ($413_i$) and delivering the estimate (5) of the real state of the process (1) depending on its probable behavior.

**8.** A system according to any one of claims 6 or 7, characterized in that said computation unit (4) is loaded with programs suitable for enabling said system to operate by implementing the method of any one of claims 1 to 5.

# FIG. 1

# FIG. 2

# FIG. 3

FIG. 4